# EUROPEAN PATENT APPLICATION

(11) **EP 4 790 817 A1**
(43) Date of publication of application: **12.08.2026**
(21) Application number: 25867228.6
(22) Date of filing: 28.10.2025
(51) Int. Cl.: H01M 50/383

(54) **BATTERY MODULE AND BATTERY PACK COMPRISING SAME**

(30) Priority: 19.12.2024 KR 20240191638
(71) Applicant: LG ENERGY SOLUTION, LTD., Seoul 07335 (KR)
(72) Inventor: CHANG, Hyuk Kyun, Daejeon 34122 (KR); KIM, Soo Youl, Daejeon 34122 (KR); PARK, Gi Chan, Daejeon 34122 (KR); CHOI, Beom Seok, Daejeon 34122 (KR); KO, Hyung Ho, Daejeon 34122 (KR)
(74) Representative: Plasseraud IP
(86) International application number: PCT/KR2025/017229
(87) International publication number: WO 2026/134622

(57) **Abstract**

According to exemplary embodiments of the present disclosure, a battery module is provided. The battery module includes: a plurality of battery cells; a module housing accommodating the plurality of battery cells; a first fire-resistant layer wrapping the plurality of battery cells such that a lower surface of the plurality of battery cells is open, and having a plurality of vent holes at an upper portion; a thermal insulation pad disposed on the first fire-resistant layer and having a plurality of slots at positions corresponding to the plurality of vent holes; a second fire-resistant layer positioned on the thermal insulation pad and covering the plurality of slots; an upper plate having a plurality of openings at positions corresponding to the plurality of slots and disposed on the second fire-resistant layer; and a flame barrier cover having a plurality of other openings at positions corresponding to the plurality of openings and installed on the upper plate.

## Description

### [Technical Field]

The present disclosure relates to a battery module and a battery pack including the same, and more specifically, to a battery module having a venting structure for preventing thermal propagation and a battery pack including the battery module. This application claims the benefit of priority from Korean Patent Application No. 10-2024-0191638, filed on December 19, 2024, the entire contents disclosed therein are incorporated by reference into this disclosure.

### [Background]

As technology development and demand for mobile devices, electric vehicles, and the like increase, the demand for secondary batteries as an energy source is rapidly increasing. A secondary battery is a battery capable of repeated charging and discharging, and is installed as a battery pack by mounting a plurality of battery modules, in which a plurality of battery cells are accommodated in a module housing, in an electric vehicle or the like.

In a battery pack, battery cells within the battery pack may be exposed to heat or flame due to the charging and discharging process or external impact. When such an event occurs, heat or flame generated in any one battery cell propagates to adjacent battery cells, leading to a thermal runaway phenomenon, which can result in a chain explosion of the battery pack.

In order to effectively respond to the thermal runaway phenomenon in a battery pack, various cooling technologies and gas venting technologies are applied to the battery pack. However, in the venting structures of conventional battery modules and battery packs, highpressure, high-temperature vent discharge discharged from a battery module in which thermal runaway has occurred is vertically discharged to the top of the battery module, strongly strikes the lid of the battery pack, and then flows back into the vent hole at the top of the battery module or enters another vent hole in the same row, thereby accelerating thermal propagation. In addition, vent discharge such as high-temperature gas, flame, and spark (hereinafter referred to simply as "vent discharge") moving between the top of the battery module and both folding portions (double side folding portions) of the battery cell spreads in random directions, causing damage to adjacent banks or adjacent modules and randomly accelerating thermal propagation. As such, in the case of conventional battery packs, venting design technology is insufficient, and since venting gas generated by thermal runaway cannot be properly isolated, guided, and discharged, there is a limitation in delaying thermal propagation to adjacent banks or adjacent modules.

### [Prior Art Document]

Korean Patent Application Publication No. 10-2024-0053258 (Publication date: April 24, 2024)

### [Summary]

### [Technical Problem]

In order to solve the problems of the prior art described above, the present disclosure is directed to providing a battery module capable of preventing thermal propagation between battery cells or between battery modules, and a battery pack including such a battery module.

### [Technical Solution]

According to exemplary embodiments of the present disclosure for achieving the above-described object, a battery module having an improved upper venting structure is provided.

The battery module comprises: a plurality of battery cells; a module housing accommodating the plurality of battery cells; a first fire-resistant layer wrapping the plurality of battery cells such that a lower surface of the plurality of battery cells is open, and having a plurality of vent holes at an upper portion; a thermal insulation pad disposed on the first fire-resistant layer and having a plurality of slots at positions corresponding to the plurality of vent holes; a second fire-resistant layer positioned on the thermal insulation pad and covering the plurality of slots; an upper plate having a plurality of openings at positions corresponding to the plurality of slots and disposed on the second fire-resistant layer; and a flame barrier cover having a plurality of other openings at positions corresponding to the plurality of openings and installed on the upper plate.

In the battery module, the first fire-resistant layer may wrap a side surface and an upper surface of the plurality of battery cells by grouping at least two battery cells into one group.

In the battery module, the vent hole may be a rectangular vent hole formed at regular intervals along a length direction of the battery cell.

In the battery module, the first fire-resistant layer may be a Mica cover.

In the battery module, the slot may be at least larger than the vent hole.

In the battery module, the thermal insulation pad may be a Si pad or an Aerogel pad.

In the battery module, the second fire-resistant layer may be an FRB (Flame Retardant Barrier) material or an HPI (High-Performance Insulation) insulation material.

In the battery module, the opening of the upper plate may be equal to or larger than the slot of the thermal insulation pad.

In the battery module, the flame barrier cover may include an upper cover, and a left cover and a right cover coupled to a lower left side and a lower right side of the upper cover.

In the battery module, the other opening of the flame barrier cover may be substantially equal in size to the opening of the upper plate.

In the battery module, the flame barrier cover may be any one of a Mica, Superwool, or silicon material cover.

Meanwhile, according to an exemplary embodiment of the present disclosure, a battery pack comprising the battery module described above; and a pack housing accommodating the battery module is provided.

### [Advantageous Effects]

A battery module according to exemplary embodiments of the present disclosure can prevent thermal runaway and thermal propagation between battery cells or between battery modules through a change in the upper venting structure.

The effects that can be obtained in exemplary embodiments of the present disclosure are not limited to the above-described effects, and other effects not mentioned can be derived and understood by a person skilled in the art from the following description. In other words, unintended effects of implementing the exemplary embodiments of the present disclosure may also be derived from the exemplary embodiments of the present disclosure by a person skilled in the art.

### [Brief Description of the Drawings]

FIG. 1 is a perspective view of a battery module according to an exemplary embodiment of the present disclosure.
FIG. 2 is an exploded perspective view of FIG. 1.
FIG. 3 is a cross-sectional view taken along line A-A of FIG. 1.
FIG. 4 is a schematic diagram for explaining a venting process of FIG. 3.
FIG. 5 is a perspective view of a battery pack in which the battery module of FIG. 1 is mounted.

### [Detailed Description]

Hereinafter, preferred embodiments of the present disclosure will be described in detail with reference to the accompanying drawings. Prior to this, the terms or words used in the present specification and claims should not be construed as being limited to conventional or dictionary meanings, and should be interpreted as meanings and concepts that conform to the technical idea of the present disclosure based on the principle that the inventors can appropriately define the concept of terms in order to describe their own invention in the best way.

Therefore, it should be understood that the embodiments described in the present specification and the configurations shown in the drawings are merely one most preferred embodiment of the present disclosure and do not represent all of the technical ideas of the present disclosure, so that various equivalents and modifications that may replace them may exist at the time of the present application.

In addition, in describing the present disclosure, when it is determined that a detailed description of a related known configuration or function may obscure the gist of the present disclosure, the detailed description thereof will be omitted.

The embodiments of the present disclosure are provided to more completely describe the present disclosure to those skilled in the art, so the shapes and sizes of components in the drawings may be exaggerated, omitted, or schematically illustrated for clearer explanation. Therefore, the size or ratio of each component does not entirely reflect the actual size or ratio.

### (First Embodiment)

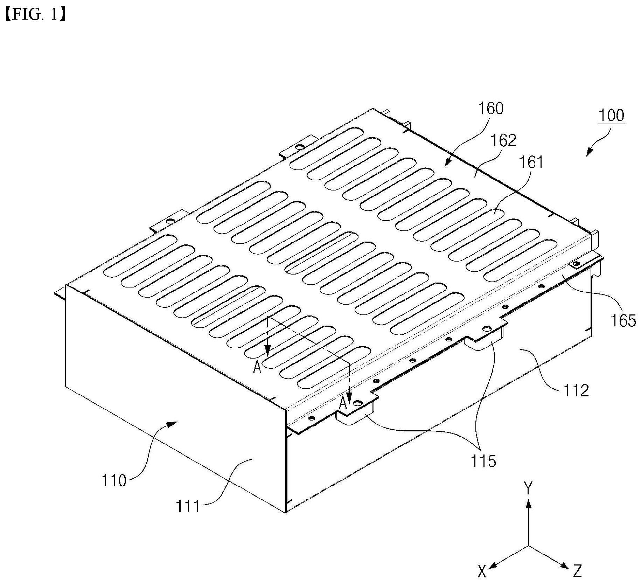

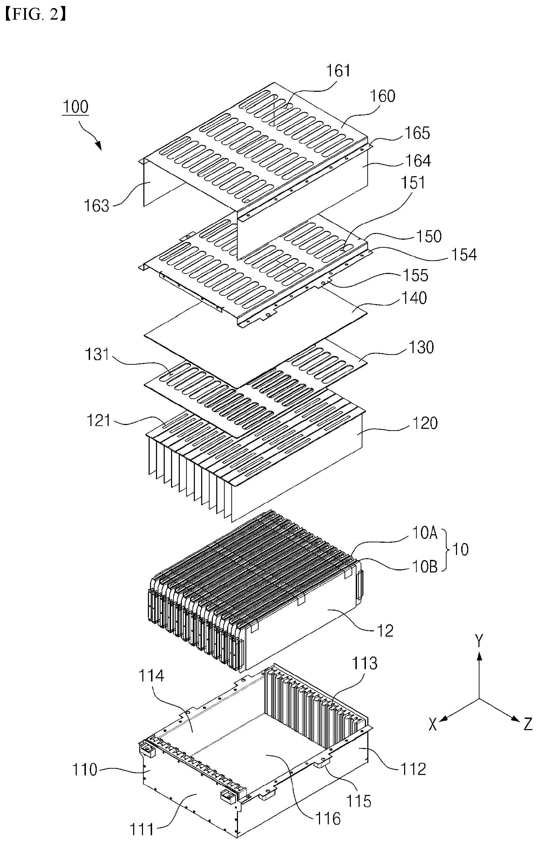

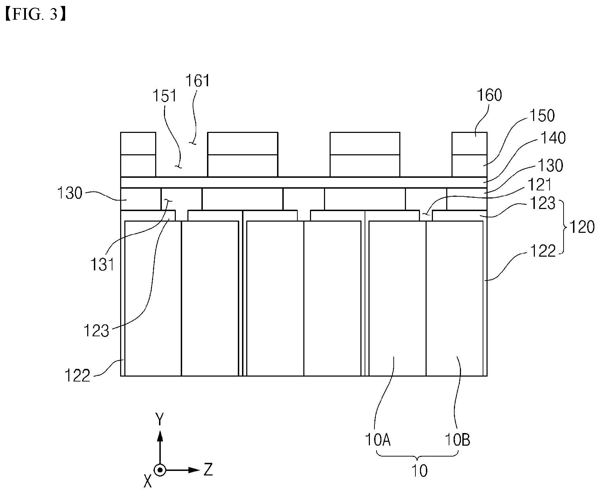

FIG. 1 is a perspective view of a battery module according to an exemplary embodiment of the present disclosure, FIG. 2 is an exploded perspective view of FIG. 1, and FIG. 3 is a cross-sectional view taken along line A-A of FIG. 1.

Referring to FIG. 1 to FIG. 3, the battery module 100 according to the present embodiment includes a plurality of battery cells 10A, 10B and a module housing 110 accommodating the plurality of battery cells 10A, 10B.

The module housing 110 may accommodate a battery cell assembly 10 in which a plurality of battery cells 10A, 10B are arranged by being stacked or assembled in one direction.

The battery cell assembly 10 may include the plurality of battery cells 10A, 10B. Each of the battery cells 10A, 10B is a basic unit of a lithium-ion battery, i.e., a secondary battery. Each of the battery cells 10A, 10B may include an electrode assembly, an electrolyte, and a cell case. An electrode assembly provided in the cell case may include a positive electrode, a negative electrode, and a separator interposed between the positive electrode and the negative electrode. The electrode assembly may be any one of a jelly-roll type and a stack type depending on the assembly form. A jelly-roll type electrode assembly may include a winding structure of a positive electrode, a negative electrode, and a separator interposed therebetween. A stack type electrode assembly may include a plurality of positive electrodes, a plurality of negative electrodes, and a plurality of separators interposed therebetween, which are sequentially stacked. A positive electrode may include a positive electrode current collector and a positive electrode active material. A negative electrode may include a negative electrode current collector and a negative electrode active material.

The plurality of battery cells 10A, 10B may be connected in series and/or in parallel. In one example, the plurality of battery cells 10A, 10B may be connected in series with each other. In one example, the plurality of battery cells 10A, 10B may also be connected in parallel with each other. In one example, when a set of two or more battery cells 10A, 10B connected in parallel with each other is defined as a bank, one bank consisting of two or more battery cells 10A, 10B connected in parallel with each other and another bank consisting of two or more battery cells 10A, 10B connected in parallel with each other may be connected in series.

Each of the battery cells 10A, 10B may correspond to a pouch-type battery cell, a cylindrical battery cell, or a prismatic battery cell. An electrode assembly of a pouch-type battery cell is embedded in a pouch case including an aluminum laminate sheet. An electrode assembly of a cylindrical battery cell is embedded in a cylindrical metal can. An electrode assembly of a prismatic battery cell is embedded in a prismatic metal can.

In the present embodiment, the battery cells 10A, 10B may be pouch-type battery cells. A pouch-type battery cell may be formed by accommodating an electrode assembly in a pouch case of a laminate sheet including a resin layer and a metal layer, and then adhering an outer periphery of the pouch case. Such battery cells 10A, 10B may be formed in a rectangular sheet structure.

The battery cell 10A, 10B has a structure in which two electrode leads face each other and protrude from one end and the other end of a battery body, respectively. The battery cell 10A, 10B may be manufactured by accommodating an electrode assembly in a battery case and adhering both ends of the battery case and one side portion connecting them. The battery cell 10A, 10B may be a unidirectional battery cell in which two electrode leads protrude in the same direction.

The battery cell 10A, 10B may be configured in a plurality, and may be assembled to be electrically connected to each other to form a battery cell assembly 10. In the battery cell assembly 10, a plurality of battery cells 10A, 10B may be arranged along a direction parallel to the Z-axis (thickness direction of the battery cell). In the present specification, for convenience of description, when viewed based on a battery cell in the diagrams, a length direction of the battery cell is defined as the X direction, a width direction of the battery cell is defined as the Y direction, and a thickness direction of the battery cell is defined as the Z direction. The battery cell assembly 10 may have side plates 12 disposed on both sides to protect the battery cell assembly 10.

The module housing 110 accommodating the battery cell assembly 10 includes a front frame 111, side frames 112, 114, a rear frame 113, and a bottom frame 116. In addition, the module housing 110 may also have a structure in which the front frame 111 and the rear frame 113 are absent and the plurality of battery cells 10A, 10B are wrapped only by the side frames 112, 114. The module housing 110 may be coupled to an upper plate 150 described later. That is, fastening members 115 at the upper ends of both side frames 112, 114 of the module housing 110 and fastening members 155 of the upper plate 150 may be coupled to each other by bolts.

A first fire-resistant layer 120 wraps the plurality of battery cells 10A, 10B such that a lower surface of the plurality of battery cells 10A, 10B is open. For example, as shown in FIG. 3, the first fire-resistant layer 120 is manufactured in a '⊏' shape and may wrap a side surface 122 and an upper surface 123 of the plurality of battery cells 10A, 10B by grouping at least two battery cells 10A, 10B into one group. If necessary, it is also possible to wrap the side surface 122 and the upper surface 123 by grouping a plurality of battery cells 10A, 10B, ... into one group, without being limited to two battery cells 10A, 10B.

The first fire-resistant layer 120 may have a plurality of vent holes 121 at an upper portion. The vent hole 121 may be an elongated rectangular vent hole or a rectangular vent hole having both sides arc-shaped, formed at regular intervals along a length direction (X direction) of the battery cells 10A, 10B. When manufactured by grouping two battery cells 10A, 10B into one group, the vent hole 121 may span across the upper portion of one battery cell 10A and another adjacent battery cell 10B. That is, the vent hole 121 may be formed at the upper portion centered on the boundary line where the two battery cells 10A, 10B are in contact.

The first fire-resistant layer 120 may be a Mica cover. Since mica has flexibility, it can be made into a sufficiently thin and flexible sheet, and can maintain its physical and chemical properties even in a high-temperature environment of 800 to 1,000°C. Mica has high insulation resistance and is electrically stable, thereby preventing short circuits between battery cells. That is, Mica has low thermal conductivity, which can delay the transfer of heat inside a battery cell or between cells. Accordingly, the first fire-resistant layer 120 serves as a thermal barrier capable of reducing thermal conductivity between battery cells or through the top of the cells and preventing damage to adjacent cells caused by vent discharge.

The battery cell assembly 10 wrapped by the first fire-resistant layer 120 may be attached to a bottom frame 116 of the module housing 110 with resin or the like.

A thermal insulation pad 130 may be disposed as a buffer material on the first fire-resistant layer 120 and the battery cells 10A, 10B. The thermal insulation pad 130 can prevent thermal propagation through the top of the battery cells 10A, 10B and guide venting to a target portion through physical pressing on areas other than the vent holes. The thermal insulation pad 130 may be a Si material pad or an Aerogel pad.

The thermal insulation pad 130 may have a plurality of slots 131 at positions corresponding to the plurality of vent holes 121 of the first fire-resistant layer 120. The slot 131 of the thermal insulation pad 130 is preferably larger than the vent hole 121 of the first fire-resistant layer 120. The slots 131 may all extend in the same direction. For example, the slots 121 may extend in the length direction (X direction), be spaced apart from each other in the length direction and the thickness direction (Y direction), and be arranged in a grid pattern.

A second fire-resistant layer 140 is positioned on the thermal insulation pad 130 and covers the plurality of slots 131 of the thermal insulation pad 130. The second fire-resistant layer 140 is disposed between the upper plate 150 and the thermal insulation pad 130, and is ruptured when an event occurs, and is discharged through the ruptured hole. The second fire-resistant layer 140 is a barrier sheet that blocks flame, and may be an FRB (Flame Retardant Barrier) material or an HPI (High-Performance Insulation) insulation material.

An upper plate 150 is disposed on the second fire-resistant layer 140 and has a plurality of openings 151 at positions corresponding to the plurality of slots 131 of the thermal insulation pad 130. The opening 151 of the upper plate 150 is preferably equal to or larger than the size of the slot 131 of the thermal insulation pad 130. The upper plate 150 may have flanges 154 on both side edges to be coupled to a flame barrier cover 160. In addition, the upper plate 150 may have fastening members 155 provided on a portion of the flanges 154 to be coupled to the fastening members 115 of the lower module housing 110. The upper plate 150 may be formed of a plastic or metal material that can maintain rigidity.

The flame barrier cover 160 includes an upper cover 162, and a left cover 163 and a right cover 164 coupled to a lower left side and a lower right side of the upper cover 162. Flanges 165 are provided on both side edges of the upper cover 162 to be coupled to the flanges 154 of the upper plate 150. The upper cover 162 of the flame barrier cover 160 is coupled on top of the upper plate 150, while the left cover 163 and the right cover 164 may be coupled below the flanges 165 on the left side and right side of the upper plate 150, respectively.

The upper cover 162 of the flame barrier cover 160 may have a plurality of other openings 161 at positions corresponding to the plurality of openings 151 of the upper plate 150. The other opening 161 of the upper cover 162 may be substantially equal in size to the opening 151 of the upper plate 150. The flame barrier cover 160 may be made of any one of a Mica, Superwool, or silicon material cover.

As such, in the battery module 100 according to the present embodiment, the thermal insulation pad 130, the second fire-resistant layer 140, the upper plate 150, and the flame barrier cover 160 are sequentially disposed on the first fire-resistant layer 120 in a state where the plurality of battery cell assemblies 10 are surrounded by the first fire-resistant layer 120. Such a battery module 100 has a venting structure capable of guiding vent discharge such as gas in a specific direction and blocking vent discharge such as gas from flowing into adjacent cells.

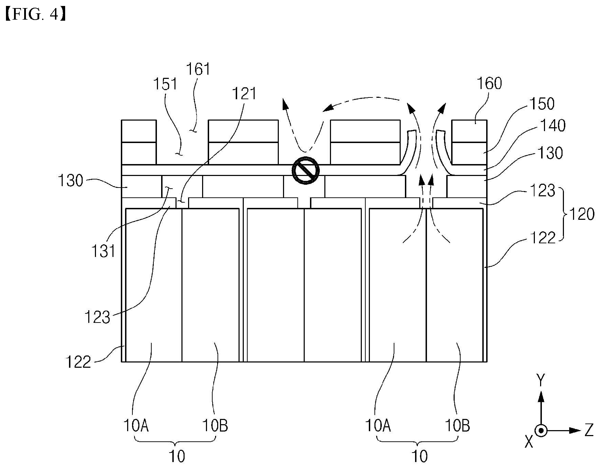

FIG. 4 is a schematic diagram for explaining the venting process of the battery module 100 described above.

Referring to FIG. 4, when an event occurs in any one of the battery cells 10A, 10B of the battery module 100, the internal pressure of the battery cells 10A, 10B increases, and vent discharge inside the cell may move upward through the vent hole 121 of the first fire-resistant layer 120.

As the vent discharge passes through the slot 131 of the thermal insulation pad 130 and the pressure gradually increases, the second fire-resistant layer 140 will rupture at some point. Then, the vent discharge passes through the ruptured hole and is discharged upward through the opening 151 of the upper plate 150 and the other opening 161 of the flame barrier cover 160. The vent discharge may be discharged to the outside through a venting device by the directional venting structure of the battery module 100. In this process, even if the vent discharge moves to an adjacent cell, the second fire-resistant layer of the adjacent cell can block the vent discharge and prevent the vent discharge from flowing back into the adjacent cell.

Therefore, the upper venting structure of the battery module 100 according to the present embodiment can prevent thermal propagation between battery cells and also delay thermal propagation between adjacent battery modules 100.

### (Second Embodiment)

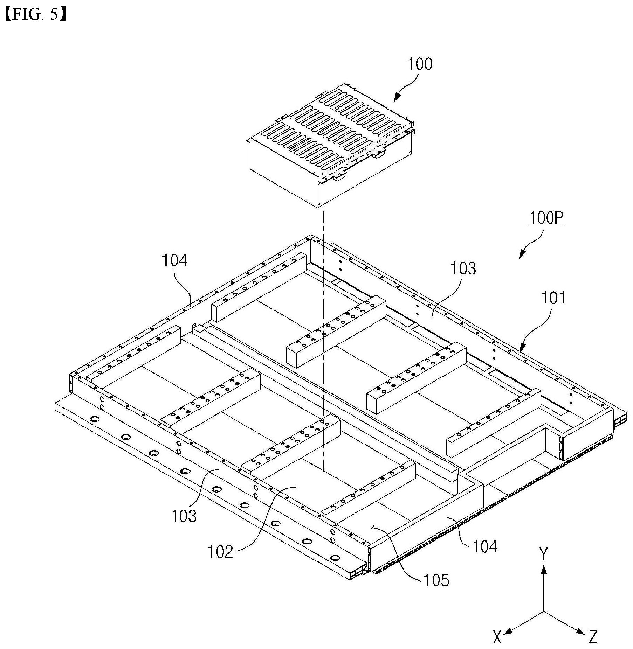

FIG. 5 is a perspective view of a battery pack 100P accommodating a battery module 100 of the present disclosure.

Referring to FIG. 5, the battery pack 100P according to the present embodiment includes the battery module 100 described above and a pack housing 101 in which the battery module 100 is accommodated.

The pack housing 101 includes a base plate 102, a side plate 103, and an end plate 104.

The base plate 102 is located at the bottom of the pack housing 101 and is disposed to face a bottom surface of a module housing 110. The base plate 102 may be coupled to a lower end of each of two side plates 103 disposed on both sides of the pack housing 101.

A venting device for discharging gas to the outside may be provided on one side of the side plate 103.

The end plate 104 may be located at both side ends of the base plate 102. A Battery Management System (BMS) may be disposed in a space 105 between one end plate 104 and the battery module 110. The BMS may be configured to perform monitoring, balancing, and control of the battery pack 100P. The monitoring of the battery pack 100P may include monitoring of voltage and current of specific nodes inside the plurality of battery modules 100 and monitoring of temperature distribution at set positions inside the battery pack 100P.

An upper cover plate (not shown) may be located at the top of the pack housing 101. The upper cover plate is a member for covering the battery module 110, and a cooling channel may be formed therein. Depending on the battery model, a cooling channel may also be installed in the base plate. The upper cover plate may be attached to the upper surface of the battery module 110 and may be thermally coupled to the battery module 110.

The upper cover plate, the base plate 102, the side plate 103, and the end plate 104 together form a predetermined space capable of accommodating the battery module 100.

In the case of the battery pack 100P of the present disclosure, when heat or flame is generated in any one of the battery cells 10A, 10B of the battery module 110, vent discharge is prevented from flowing back into the battery module adjacent to the corresponding battery cells 10A, 10B, as described above.

The battery pack 100P may include a venting passage and a venting device for discharging thermal energy and gas discharged upward from the battery module 100. Vent discharge present inside the battery module 100 may be finally discharged to the outside through the venting device via a venting passage provided in the base plate 102. The venting device will enable the discharge of the thermal energy and gas by rupturing when the internal pressure of the battery pack 100P reaches a predetermined level or more. The effect of reducing or blocking gas inflow of the battery module 100 according to the present disclosure will be more significant in a situation where the internal pressure of the battery pack 100P is increasing before the venting device ruptures.

As aforementioned, the present disclosure has been described in more detail through the drawings, embodiments, and the like. However, since the configuration described in the drawings or embodiments, etc. described herein is merely one embodiment of the present disclosure and does not represent the overall technical spirit of the disclosure, it should be understood that there may be various equivalents and modifications that can replace them at the time of filing of this application.

## Claims

1. A battery module, comprising:
a plurality of battery cells;
a module housing accommodating the plurality of battery cells;
a first fire-resistant layer wrapping the plurality of battery cells such that a lower surface of the plurality of battery cells is open, and having a plurality of vent holes at an upper portion;
a thermal insulation pad disposed on the first fire-resistant layer and having a plurality of slots at positions corresponding to the plurality of vent holes;
a second fire-resistant layer positioned on the thermal insulation pad and covering the plurality of slots;
an upper plate having a plurality of openings at positions corresponding to the plurality of slots and disposed on the second fire-resistant layer; and
a flame barrier cover having a plurality of other openings at positions corresponding to the plurality of openings and installed on the upper plate.

2. The battery module of claim 1, wherein the first fire-resistant layer wraps a side surface and an upper surface of the plurality of battery cells by grouping at least two battery cells into one group.

3. The battery module of claim 1, wherein the vent hole is a rectangular vent hole formed at regular intervals along a length direction of the battery cell.

4. The battery module of claim 1, wherein the first fire-resistant layer is a Mica cover.

5. The battery module of claim 1, wherein the slot is at least larger than the vent hole.

6. The battery module of claim 1, wherein the thermal insulation pad is a Si pad or an Aerogel pad.

7. The battery module of claim 1, wherein the second fire-resistant layer is an FRB (Flame Retardant Barrier) material or an HPI (High-Performance Insulation) insulation material.

8. The battery module of claim 1, wherein the opening of the upper plate is equal to or larger than the slot of the thermal insulation pad.

9. The battery module of claim 1, wherein the flame barrier cover comprises an upper cover, and a left cover and a right cover coupled to a lower left side and a lower right side of the upper cover.

10. The battery module of claim 1, wherein the other opening of the flame barrier cover is substantially equal in size to the opening of the upper plate.

11. The battery module of claim 1, wherein the flame barrier cover is any one of a Mica, Superwool, or silicon material cover.

12. A battery pack comprising: the battery module of claim 1; and
a pack housing accommodating the battery module.
